# EUROPÄISCHE PATENTSCHRIFT

(11) **EP 0 808 113 B1**
(45) Veröffentlichungstag und Bekanntmachung des Hinweises auf die Patenterteilung: **06.09.2000**
(21) Anmeldenummer: 96901187.3
(22) Anmeldetag: 05.02.1996
(51) Int. Cl.: A43C 7/08

(54) **KLEMMVORRICHTUNG FÜR EIN SCHNUR- ODER BANDFÖRMIGES BEFESTIGUNGSMITTEL WIE Z.B. SCHNÜRSENKEL**
CLIP DEVICE FOR A CORD- OR TAPE-SHAPED FASTENING ELEMENT SUCH AS A TYING LACE
DISPOSITIF DE SERRAGE POUR UN MOYEN DE FIXATION EN FORME DE FICELLE OU DE RUBAN, PAR EXEMPLE UN LACET

(30) Priorität: 07.02.1995 AT 22195
(43) Veröffentlichungstag der Anmeldung: 26.11.1997
(73) Patentinhaber: Mark, Rudolf, Ing., A-4582 Spital am Pyhrn (AT); Mark, Thomas, 4582 Spital am Pyhrn (AT)
(72) Erfinder: Mark, Rudolf, Ing., A-4582 Spital am Pyhrn (AT); Mark, Thomas, 4582 Spital am Pyhrn (AT)
(74) Vertreter: Secklehner, Günter, Dr.
(86) Internationale Anmeldenummer: AT9600017
(87) Internationale Veröffentlichungsnummer: WO9624269

(56) Entgegenhaltungen:
- EP-A- 0 398 303
- CH-A- 674 445
- FR-A- 1 110 669
- GB-A- 102 091
- US-A- 1 876 505

## Beschreibung

Die Erfindung betrifft eine Klemmvorrichtung, wie sie im Oberbegriff des Patentanspruches 1 beschrieben ist.

Bei der Verschnürung von Schuhen, Jacken oder Hosen stehen unterschiedlich geformte Haken, Ringösen, Ösen etc. für die Befestigungsmittel, wie z.B. die Schnürsenkel zum Fixieren der Schuhe an Füßen, zur Verfügung, wie diese z.B. aus der CH 674 445 A und der EP 398 303 A der selben Anmelder bekannt sind. Bei Schuhen, die einen höheren Schaft aufweisen, wie z.B. Arbeits-, Wander- und Sportschuhe, werden an die Sicherheit der Verschnürung, wie auch an den Tragekomfort, der sehr wesentlich von der einwandfreien Funktion der Verschnürungselemente abhängt, hohe Anforderungen gestellt. Eine ganz wesentliche Voraussetzung für den Komfort bildet bei dieser Art von Schuhen insbesondere die Möglichkeit, die Zugkraft in verschiedenen Bereichen der Verschnürung unterschiedlich zu wählen.

Die Aufgabe der Erfindung ist es, eine Klemmvorrichtung für ein schnur- oder bandförmiges Befestigungsmittel dermaßen auszubilden, daß ein freier Durchlauf beim Festziehen z.B. eines Schnürsenkels und eine sichere Klemmung des Schnürsenkels mit der erwünschten Spannung erreichbar ist.

Die Aufgabe der Erfindung wird durch die im Patentanspruch 1 wiedergegebenen Merkmale gelöst. Der überraschende Vorteil dabei ist, daß bei der erfindungsgemäßen Ausbildung der Ringöse mit dem Klemmkörper ein einwandfreies Durchlaufen des Befestigungsmittels, wie z.B. eines Schnürsenkels für das Verschnüren, aber auch das Öffnen des Schuhs, erreicht wird und andererseits durch Verschwenken der Ringöse in eine Klemmstellung für den Schnürsenkel ein Festlegen desselben erfolgt. Damit ist es aber auch möglich, in benachbarten Bereichen der Verschnürung eine unterschiedliche Spannkraft und damit Haltekräfte aufzubringen und z.B. druckempfindlichere Bereiche wie den Rist mit geringeren Spannkräften zu beaufschlagen, als z.B. den Bereich zwischen Schienbein und Rist. Weiters wird dadurch eine wirksame Klemmung des Befestigungsmittels erreicht.

Weiters vorteilhaft ist eine Ausführungsform nach Patentanspruch 2, wodurch eine Klemmung des Befestigungsmittels über den gesamten von der Ringöse umfaßten Bereich des Klemmkörpers erreicht wird.

Eine mögliche vorteilhafte Weiterbildung ist im Patentanspruch 3 beschrieben, wodurch die Klemmvorrichtung, insbesondere der Klemmkörper, in einem Fertigungs- und Herstellvorgang erzeugt werden kann, was eine Reduktion von Fertigungskosten zur Folge hat.

Von Vorteil ist weiters eine Ausbildung, wie sie im Patentanspruch 4 beschrieben ist, weil dadurch die Befestigungslasche möglichst dünn und flexibel ausgeführt werden kann und nur der Klemmbereich bzw. der Bereich der Lagerung der Ringöse verstärkt ist, was eine Reduzierung der Material- und Fertigungskosten zur Folge hat. Überdies kann die Biegesteifigkeit sowie die Festigkeit der Befestigungsvorrichtung je nach Anwendungsfall variiert werden.

Weiters vorteilhaft ist eine Ausführungsform nach Patentanspruch 5, da eine wirkungsvolle Klemmung im Bereich der Umlenkung des Befestigungsmittels erreicht wird und die Reibungsfläche zwischen Befestigungsmittel, Ringöse und Klemmkörper erhöht wird, was einen besseren Form- und Kraftschluß des Befestigungsmittels zur Folge hat und eine sogenannte Übertotpunktsperre zur Verhinderung eines selbsttätigen Lösens der Klemmung erreicht wird.

Eine mögliche vorteilhafte Weiterbildung ist in Patentanspruch 6 beschrieben, wodurch die Ringöse über den Klemmkörper verschwenkt werden kann, was insbesondere bei einem anfänglichen Durchführen des Befestigungsmittels durch die Ringöse vorteilhaft ist.

Vorteilhaft ist weiters eine Ausbildung nach Patentanspruch 7, wodurch Material weiter eingespart werden kann, ohne daß die Festigkeitseigenschaft des Schwenklagers ungünstig beeinflußt wird.

Günstig ist auch eine Ausführung nach Patentanspruch 8, wodurch eine wirkungsvolle Klemmung des Befestigungsmittels in der Klemmvorrichtung erreicht wird.

Möglich ist auch eine Weiterbildung nach Patentanspruch 9, wodurch die Elastizität sowie eine optisch ansprechende Erscheinungsform der Klemmvorrichtung in einfacher Weise mit geringen Material- und Fertigungskosten erreicht wird, ohne jedoch auf günstige Festigkeitseigenschaften, insbesondere im Schwenklager, zu verzichten.

Eine Ausführung nach Patentanspruch 10 hat den Vorteil, daß die Lagerung der Ringöse in einfacher Weise hergestellt werden kann.

Von Vorteil ist eine Ausführungsvariante nach Patentanspruch 11, wodurch der Klemmkörper mit Befestigungslasche und die Nietlasche in getrennten Fertigungseinrichtungen hergestellt werden können und erst zum Zeitpunkt der Montage der aus diesen Teilen zusammengesetzten Klemmvorrichtung auf einem Bekleidungsgegenstand miteinander verbunden werden. Überdies wird durch diese "Sandwichbauweise" der Klemmvorrichtung die Festigkeitseigenschaft positiv beeinflußt.

Eine mögliche vorteilhafte Ausbildung beschreibt Patentanspruch 12. Hier kann die Nietlasche und die Befestigungslasche mit einem einzigen Befestigungselement am Bekleidungsgegenstand montiert werden.

Vorteilhaft ist weiters eine Ausbildung nach Patentanspruch 13, wodurch die Festigkeitseigenschaften weiter erhöht werden.

Günstig ist auch eine Ausführungsvariante nach Patentanspruch 14, wodurch die Klemmvorrichtung einstückig hergestellt werden kann, was insbesondere bei kaltverformenden Fertigungsverfahren vorteilhaft ist.

Möglich ist auch eine Weiterbildung nach Patentanspruch 15, wodurch die Nietlasche in vertikaler Richtung arretiert werden kann und dadurch ein Abheben der Nietlasche von der Befestigungslasche sowie ein selbsttätiges Öffnen der Klemmvorrichtung vermieden wird.

Eine Ausführung nach Patentanspruch 16 hat den Vorteil, daß Fertigungsschritte eingespart und damit Fertigungskosten reduziert werden und ein Schwenklager durch entsprechende Montage der als Einzelteile vorliegenden Ringöse, des Klemmkörpers und der Nietlasche in einfacher Weise erreicht wird.

Der Patentanspruch 17 beschreibt eine günstige Ausführungsvariante, bei der das selbsttätige Verschwenken der Ringöse verhindert wird, was bei einer automatisierten Montage der Klemmvorrichtung unumgänglich ist. Überdies wird eine Übertotpunktsperre der Ringöse realisiert.

Weiters ist eine Ausbildung nach Patentanspruch 18 vorteilhaft, bei der die Ringöse aus dem Klemmbereich nur durch elastische Verformung verschwenkt werden kann, wodurch das Einführen des Befestigungsmittels in den Klemmbereich, z.B. beim Schnüren, ermöglicht wird. Ein selbsttätiges Verschwenken der Ringöse wird verhindert.

Schließlich ist eine Weiterbildung nach Patentanspruch 19 möglich, bei der die Nietlasche vom Klemmkörper bzw. der Befestigungslasche umhüllt wird und somit ein Sandwichbauteil entgesteht, welcher günstige Festigkeitseigenschaften besitzt.

Zum besseren Verständnis der Erfindung wird diese anhand der in den Zeichnungen dargestellten Ausführungsbeispiele näher erläutert.

Es zeigen:
- Fig. 1: eine erfindungsgemäße Klemmvorrichtung in der Draufsicht;
- Fig. 2: die Klemmvorrichtung, geschnitten, gemäß den Linien II - II in Fig. 1;
- Fig. 3: eine weitere Ausführungsvariante der erfindungsgemäßen Klemmvorrichtung in der Draufsicht;
- Fig. 4: die Klemmvorrichtung, geschnitten, gemäß den Linien IV - IV in Fig. 3;
- Fig. 5: eine andere Ausführungsvariante der erfindungsgemäßen Klemmvorrichtung in der Draufsicht;
- Fig. 6: die Klemmvorrichtung, geschnitten, gemäß den Linien VI - VI in Fig. 5;
- Fig. 7: eine weitere Ausführungsvariante der erfindungsgemäßen Klemmvorrichtung, geschnitten, in der Seitenansicht;
- Fig. 8: eine andere Ausführungsvariante der erfindungsgemäßen Klemmvorrichtung, geschnitten, in der Seitenansicht;
- Fig. 9: eine weitere Ausführungsvariante der erfindungsgemäßen Klemmvorrichtung, geschnitten, in der Seitenansicht.

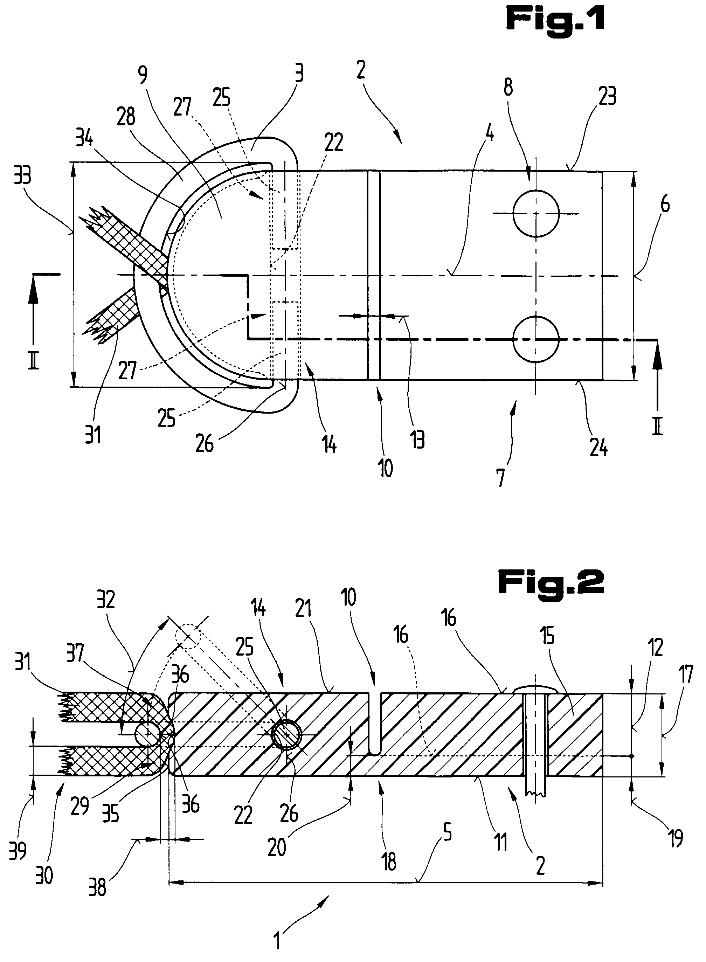

In den gemeinsam beschriebenen Fig. 1 und 2 ist eine Klemmvorrichtung 1 gezeigt, welche aus einer Nietlasche 2 und einer Ringöse 3 aufgebaut ist. Die Nietlasche 2 ist dabei symmetrisch zu einer Längsmittelachse 4 ausgebildet und weist in einer parallel zu dieser verlaufenden Richtung eine Länge 5 sowie eine im rechten Winkel zu dieser gemessene Breite 6 auf. Ein Teilbereich 7, der beispielsweise zwei symmetrisch um die Längsmittelachse 4 angeordnete Öffnungen 8 aufweist, ist von einem von der Ringöse 3 bereichsweise umfaßten Klemmkörper 9 durch einen Schwächungsbereich 10 beabstandet. Der Klemmkörper 9 ist mit der Nietlasche 2 verbunden. Der Schwächungsbereich 10 weist eine im rechten Winkel zu einer, an der Oberfläche eines Bekleidungsgegenstandes, wie z.B. eines Schuhs, einer Jacke oder einer Hose anliegenden Auflagefläche 11 gemessene Tiefe 12 und eine im rechten Winkel zu dieser und parallel zur Längsmittelachse 4 gemessene Breite 13 auf.

Der Schwächungsbereich 10, welcher über die gesamte Breite 6 verläuft, dient dazu, daß der Teilbereich, der den Klemmkörper 9 und ein Schwenklager 14 ausbildet, relativ beweglich zum Teilbereich 7, der eine Befestigungslasche 15 ausbildet, ist. Eine Oberfläche 16 der Befestigungslasche 15 ist dabei von der dieser abgewandten Auflagefläche 11 um eine Dicke 17 distanziert. Die Befestigungslasche 15 und der Klemmkörper 9 mit dem Schwenklager 14 sind beispielsweise einstückig über einen Verbindungssteg 18 miteinander verbunden. Es ist jedoch auch möglich, die Nietlasche 2 ohne den, den Klemmkörper 9 von der Befestigungslasche 15 trennenden Schwächungsbereich 10 bei Einsatz entsprechend weicher Materialien, wie z.B. entsprechender Kunststoffe, auszubilden. Wie in strichlierten Linien dargestellt, kann die Oberfläche 16 jedoch auch in einem Abstand 19 von der Auflagefläche 11 distanziert sein, welcher geringer ist als die Dicke 17. Der Abstand 19 kann dabei minimiert werden, sodaß die Befestigungslasche 15 mit dem Bekleidungsgegenstand auch vernäht oder verklebt werden kann, wodurch die Öffnung 8 entfällt. Der Abstand 19 kann weiters so gewählt sein, daß er einer Stärke 20 des Verbindungssteges 18, welche aus der Dicke 17, vermindert um die Tiefe 12, gebildet wird, entspricht. Dabei ist eine der Auflagefläche 11 abgewandt und parallel zu dieser verlaufende Oberseite 21 des Klemmkörpers 9 von der Oberfläche 16 entgegengesetzt zur Auflagefläche 11 um die Tiefe 12 beabstandet.

Das von der Befestigungslasche 15 durch den Schwächungsbereich 10 beabstandete Schwenklager 14 weist eine oder mehrere in etwa parallel zur Auflagefläche 11 und zur Breite 6 verlaufende Lagerbohrungen 22 auf. Diese können als kreisförmige Bohrungen über die gesamte Breite 6 verlaufen. Es ist jedoch auch möglich, zwei als Sacklöcher ausgebildete Lagerbohrungen 22 anzuordnen. Von durch die Breite 6 beabstandete und parallel zur Längsmittelachse 4 verlaufende Seitenflächen 23, 24 der Nietlasche 2 verlaufen in der Lagerbohrung 22 zueinander in Richtung der Längsmittelachse 4 gerichtete Schwenkachsen 25 der Ringöse 3. Diese sind konzentrisch um eine Drehachse 26 angeordnet, welche parallel zur Auflagefläche 11 und zur Breite 6 im Zentrum der Lagerbohrung 22 verläuft. Die Drehachse 26 kann dabei von der Auflagefläche 11 in Richtung der Oberseite 21 so distanziert sein, daß die Schwenkachsen 25 innerhalb des durch die Tiefe 12 begrenzten Bereiches angeordnet sind.

Die Ringöse 3 ist beispielsweise C-förmig ausgebildet, deren in die Lagerbohrung 22 ragende, geradlinig verlaufende Endbereiche 27 die Schwenkachsen 25 ausbilden. Ein die Schwenkachsen 25 miteinander verbindender Bügel 28 verläuft dabei beispielsweise in etwa halbkreisförmig um einen beispielsweise ebenfalls in etwa halbkreisförmig ausgebildeten Klemmbereich 29 des Klemmkörpers 9. Es ist jedoch auch möglich, den Bügel 28 so auszugestalten, daß er einen in etwa parallel zur Breite 6 verlaufenden Teilschenkel besitzt, der mit den zu diesen parallel angeordneten Schwenkachsen 25 über parallel zu den Seitenflächen 23 und 24 verlaufende Teilschenkel verbunden ist.

Auch ist es möglich, den Bügel 28 so zu gestalten, daß er ohne einen parallel zur Breite 6 verlaufenden Teilschenkel aus zwei winkelig zueinander angeordneten, miteinander sowie mit den Schwenkachsen 25 verbundenen Teilschenkel gebildet ist. Die Ringöse 3 kann aus einem Draht mit beispielsweise kreisförmigen, rechteckigen oder dreieckigen Querschnitt gebogen werden. Die Ringöse 3 befindet sich im montierten Zustand in einer zur Auflagefläche 11 in etwa parallelen Lage, in welcher mit dem Klemmbereich 29 des Klemmkörpers 9 die Sperrstellung für ein Befestigungsmittel 30, wie z.B. für einen Schnürsenkel 31, ausgebildet wird. Sie kann jedoch bedingt durch einen geringen Spielraum der Schwenkachsen 25 in der Lagerbohrung 22 bzw. durch elastische Verformung des Bügels 28 und der Schwenkachsen 25 so aufgeweitet werden, daß sie in eine das Befestigungsmittel 30 freigebende Freigabestellung (wie strichliert dargestellt) um einen Schwenkwinkel 32, welcher kleiner als 180° ist, verschwenkt wird.

Um dies zu erreichen, muß unter anderem die Breite 6, welche beispielsweise auch den Klemmkörper 9 begrenzt, geringfügig kleiner sein als eine parallel zur Lagerbohrung 22 verlaufende Innenweite 33 der Ringöse 3, welche eine der Nietlasche 2 zugewandte innere Oberfläche 34 der Ringöse 3 begrenzt. Der inneren Oberfläche 34 zugewandt und den äußersten Bereich des Klemmkörpers 9 mit dessen Klemmbereich 29 begrenzend, verläuft eine Stirnfläche 35 beispielsweise im rechten Winkel zur Auflagefläche 11. Die Stirnfläche 35 des Klemmkörpers 9 bildet gemeinsam mit der inneren Oberfläche 34 der Ringöse 3 bei in etwa parallel zur Auflagefläche 11 befindlichen Lage derselben Klemmflächen 36 aus, zwischen denen im Klemmbereich 29 das Befestigungsmittel 30 verpreßt wird. Die Stirnfläche 35 kann ebenflächig sein oder aber auch eine nutförmige Vertiefung 37 aufweisen, die konkav in Richtung der Schwenkachsen 25 zurück geformt ist. Diese Vertiefung 37, die die Klemmfläche 36 bildet, kann einen kreisbogenförmigen, aber auch einen eckigen Querschnitt besitzen, wobei ein den Schwenkachsen 25 am nächsten liegender Punkt der Oberfläche der nutförmigen Vertiefung 37 von der inneren Oberfläche 34 des Bügels 28 um eine Distanz 38 beabstandet ist. Diese distanziert somit die Klemmflächen 36 und ist zumindest im Klemmbereich 29 kleiner als eine Dicke 39 des Befestigungsmittels 30 in unverformtem Zustand. Sie kann jedoch auch über den gesamten Verlauf der Stirnfläche 35 oder der inneren Oberfläche 34 in etwa konstant ausgeführt werden. Im Falle eines kreisbogenförmig ausgestalteten Bügels 28 verläuft also sowohl die nutförmige Vertiefung 37, als auch die Stirnfläche 35 in etwa konzentrisch zur inneren Oberfläche 34.

Sie ist weiters so dimensioniert, daß im unverformten Zustand der Ringöse 3, insbesondere des Bügels 28, d.h. wenn weder eine Verformungskraft auf den Bügel 28 ausgeübt noch ein Befestigungsmittel 30 eingeführt ist, die innere Oberfläche 34 an der Stirnfläche 35 anliegt und somit ein selbsttätiges Verschwenken der Ringöse 3 vermieden wird. Dies ist insbesondere bei der automatisierten Montage der Klemmvorrichtung 1 auf einen Bekleidungsgegenstand notwendig, da ein selbsttägiges Verschwenken der Ringöse 3 in eine undefinierte Zwischenlage die Störanfälligkeit einer Montagevorrichtung wesentlich erhöht.

Soll jedoch ein Befestigungsmittel 30 eingeführt werden, so kann die Ringöse 3 aufgrund ihrer Elastizität durch Ausüben einer Verformungskraft über die Stirnfläche 35 hinweg in Richtung der Oberseite 21 und der Befestigungslasche 15 verschwenkt werden.

Durch die nutförmige Vertiefung 37 in der Stirnfläche 35 wird im Bereich zwischen dieser und der Oberfläche 16 des Klemmkörpers 9 ein wulstförmiger Vorsprung gebildet, der einen Totpunkt beim Verschwenken der Ringöse 3 darstellt. Wird die Ringöse 3 mit dem hindurchgezogenen Schürsenkel 31 in eine Klemmstellung verschwenkt, bei der die Ringöse 3 in etwa zur Oberfläche 16 parallel verläuft, so muß dieser Totpunkt überwunden werden. Das Verschwenken erfolgt dabei durch eine schräg gerichtete Zugwirkung am Schnürsenkel 31, wobei eine durch die Zugwirkung gebildete Kraftkomponente in Richtung der Auflagefläche 11 des Klemmkörpers 9 weist. Das Klemmen des Schnürsenkels 31 kann also im Anschluß an den Schnürvorgang durch entsprechende Zugrichtung erfolgen und erfordert daher nicht die Zuhilfenahme der zweiten Hand des Benutzers. Des weiteren bewirkt der durch die wulstförmige Erhöhung gebildete Totpunkt eine verläßliche Sperre, die einer selbsttätigen und unbeabsichtigten Aufhebung der Klemmwirkung entgegensteht.

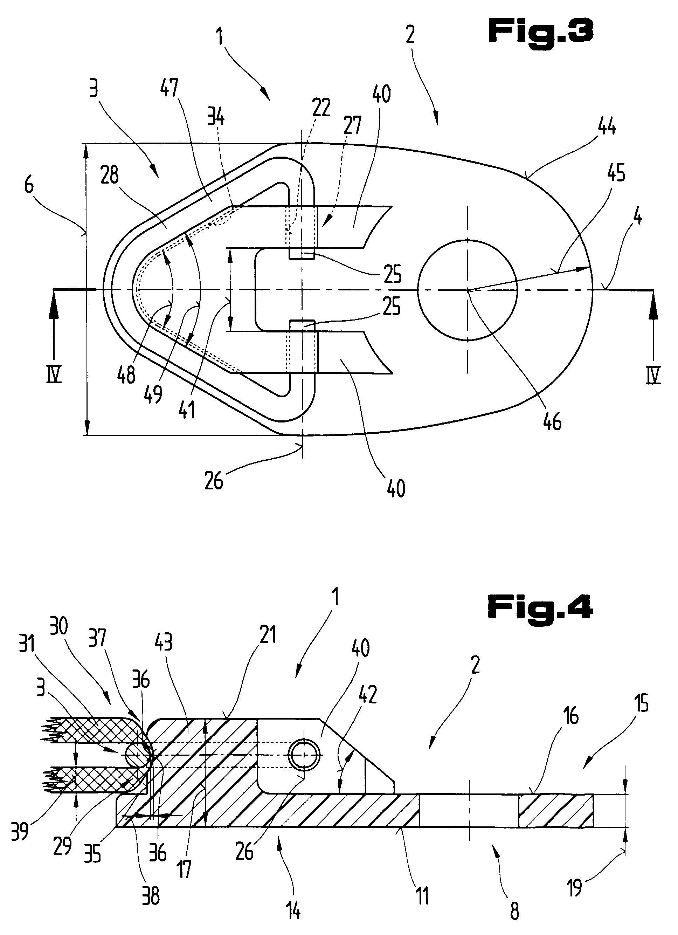

In den gemeinsam beschriebenen Fig. 3 und 4 ist eine weitere Ausbildungsvariante der Klemmvorrichtung 1 mit einer Nietlasche 2 und einer Ringöse 3 gezeigt. Die Nietlasche 2 ist dabei so ausgestaltet, daß die Oberfläche 16 von der Auflagefläche 11 im Abstand 19 parallel zu dieser verläuft, welcher geringer ist als die durch die Auflagefläche 11 und die Oberseite 21 begrenzte Dicke 17 des Schwenklagers 14. Die Befestigungslasche 15 weist weiters die Öffnung 8 in Form einer Bohrung zur Aufnahme des Befestigungselementes auf.

Als Befestigungselement kann jedoch nicht nur eine Niete verwendet werden, sondern es ist auch möglich, die Befestigungslasche 15 beispielsweise durch Vernähen mit dem Bekleidungsgenstand zu verbinden. Dabei entfällt einerseits die Öffnung 8 und andererseits muß die Befestigungslasche 15 möglichst dünn ausgeführt werden, wodurch insbesondere der Abstand 19 möglichst gering gehalten werden muß.

Das Schwenklager 14 ist so ausgestaltet, daß die Lagerbohrung 22 in je einer parallel zur Längsmittelachse 4 verlaufenden Rippe 40 konzentrisch um die Drehachse 26 der in den Endbereichen 27 der Ringöse 3 angeordneten Schwenkachsen 25 verläuft. Die Rippen 40 sind beispielsweise symmetrisch zur Längsmittelachse 4 in einem Abstand 41 voneinander distanziert und verlaufen von der Oberfläche 16 in Richtung der Oberseite 21 in einem Neigungswinkel 42. Die Rippen 40 sind angeformt an einen Klemmkörper 43, welcher einstückig mit der Befestigungslasche 15 verbunden und von der inneren Oberfläche 34 der Ringöse 3 zumindest bereichsweise umfaßt ist. Der Klemmkörper 43 besitzt die den Klemmbereich 29 ausbildende nutförmige Vertiefung 37, welche die Stirnfläche 35 des Klemmkörpers 43 konkav in Richtung der Drehachse 26 einformt.

Die dadurch ausgebildete Distanz 38 zwischen der inneren Oberfläche 34 der Ringöse 3 und dem in Richtung der Drehachse 26 am weitest zurückragenden Punkt der nutförmigen Vertiefung 37 ist dabei kleiner als die Dicke 39 des Befestigungsmittels 30, beispielsweise des Schnürsenkels 31, in unverformtem Zustand. Die Befestigungslasche 15 weist in der Draufsicht beispielsweise eine symmetrisch um die Längsmittelachse 4 verlaufende gekrümmte Umrißkante 44 auf, welche in dem der Öffnung 8 zugeordneten Bereich kreisbogenförmig in einem Radius 45 um eine Symmetrieachse 46 der Öffnung 8 verlaufen kann. Die von der Längsmittelachse 4 am weitest beabstandeten Punkte der Umrißkante 44 sind durch die Breite 6 begrenzt.

Die Ringöse 3 bzw. der die beiden Schwenkachsen 25 miteinander verbindende Bügel 28 ist aus zwei Teilschenkeln 47 gebildet, welche zueinander symmetrisch um die Längsmittelachse 4 in einem Schenkelwinkel 48 geneigt verlaufen. Aufgrund der Tatsache, daß die innere Oberfläche 34 der Ringöse 3 bzw. der Teilschenkel 47 in einer in etwa gleichen Distanz 38 um die Stirnfläche 35 verläuft, ergibt sich für diese ebenfalls eine dem Schenkelwinkel 48 in etwa entsprechende Neigung 49. Die innere Oberfläche 34 und die Stirnfläche 35 bzw. die Oberfläche der nutförmigen Vertiefung 37 bilden, wie bereits beschrieben, die Klemmflächen 36.

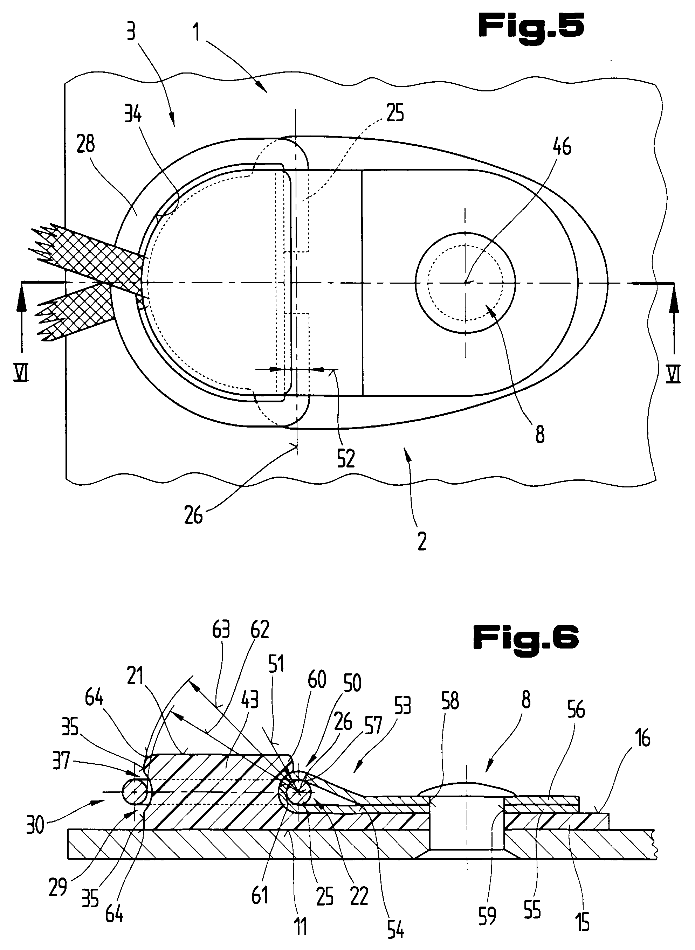

In den gemeinsam beschriebenen Fig. 5 und 6 ist eine andere Ausführungsvariante der Klemmvorrichtung 1 gezeigt. Bei dieser ist die Nietlasche 2 als eigener Teil gestaltet, welcher vom Klemmkörper 43 bzw. von der an diesem angeformten Befestigungslasche 15 getrennt und auf der Oberfläche 16 der Befestigungslasche 15 angeordnet ist. Die Nietlasche 2 ist dabei ein aus Blech gefertigter, doppellagig ausgebildeter Biegeteil, der einen Biegebereich 50 aufweist, welcher dem Klemmkörper 43, der mit der Befestigungslasche 15 aus einem Stück, beispielsweise aus Kunststoff, gefertigt ist, benachbart ist. Der Biegebereich 50 besitzt einen inneren Biegeradius 51, welcher in etwa einem halben Durchmesser 52 der Schwenkachsen 25 entspricht und von der im Zentrum der Schwenkachse 25 verlaufenden Drehachse 26 gemessen wird.

Der Biegebereich 50 umschließt die Schwenkachsen 25 in einem Umschlingungswinkel, welcher beispielsweise kleiner als 360° ist, sodaß ein Neigungsbereich 53 ausgebildet wird, der von einem zwischen den Schwenkachsen 25 und der Öffnung 8 gelegenen Berührungspunkt 54, an dem zwei Teilschenkel 55 und 56 der Nietlasche 2 aneinander grenzen, in Richtung eines am Umfang der Schwenkachsen 25 bzw. des durch den inneren Biegeradius begrenzten Innenumfanges des Biegebereiches 50 gelegenen Tangentenpunktes 57 in der Oberfläche 16 abgewandten Richtung geneigt verläuft. Durch den Biegebereich 50 und den Neigungsbereich 53 wird die Lagerbohrung 22 ausgebildet, in der die Schwenkachsen 25 gelagert sind. Die beiden Teilschenkel 55 und 56 der Nietlasche 2 besitzen konzentrisch zueinander und zur Symmetrieachse 46 der Öffnung 8 ebenfalls beispielsweise als Bohrungen ausgebildete Durchbrüche 58 und 59, welche somit mit der Öffnung 8 in Deckungslage angeordnet sind.

Der Klemmkörper 43 besitzt, dem Biegebereich 50 zugewandt und dem Klemmbereich 29 abgewandt, einen von der Oberfläche 16 beabstandeten Arretiervorsprung 60, welcher in Richtung der Öffnung 8 ragt, wodurch eine in entgegengesetzter Richtung zu dieser konkav verlaufende Einformung 61 geschaffen wird, in der der Biegebereich 50 der Nietlasche 2 eingebettet ist. Dadurch wird verhindert, daß die Nietlasche 2, insbesondere der Biegebereich 50, von der Oberfläche 16 bei einer entgegengesetzt zur Oberfläche 16 gerichteten Kraft abgehoben wird. Der Klemmkörper 43 besitzt weiters, wie bereits beschrieben, die Vertiefung 37. Der Bügel 28 hat bei dieser Variante wiederum einen kreisbogenförmigen Umriß, wodurch sich ein ebenfalls durch die Stirnfläche 35 gebildeter kreisbogenförmiger Umriß für den Klemmkörper 43 ergibt. Dadurch wird bei automatisierter Montage eine Positionierung der Nietlasche 2 zum Klemmkörper 43 erreicht.

Die innere Oberfläche 34 der Ringöse 3 ist von der Drehachse 26 der Schwenkachsen 25 um einen Schwenkradius 62 distanziert. Dieser ist im unverformten Zustand der Ringöse 3 bzw. des Bügels 28 kleiner als eine Weite 63, welche von der Drehachse 26 eine obere Umrißkante 64 distanziert. Diese stellt die Berührungslinie der Stirnfläche 35 mit der Oberseite 21 bzw. der Auflagefläche 11 dar.

Dadurch wird bewirkt, daß die unverformte Ringöse 3 nicht selbsttätig über den Klemmbereich 29 bzw. über die Auflagefläche 11 oder die Oberseite 21 hinweg verschwenkt werden kann.

Soll jedoch das Befestigungsmittel 30 in den Klemmbereich 29 eingeführt werden, so läßt sich der Schwenkradius 62 aufgrund der der Ringöse 3 innewohnenden Elastizität so vergrößern, daß er mindestens das Maß der Weite 63 einnimmt, wodurch die Ringöse 3 über die Auflagefläche 11 oder die Oberseite 21 hinweg verschwenkt werden kann.

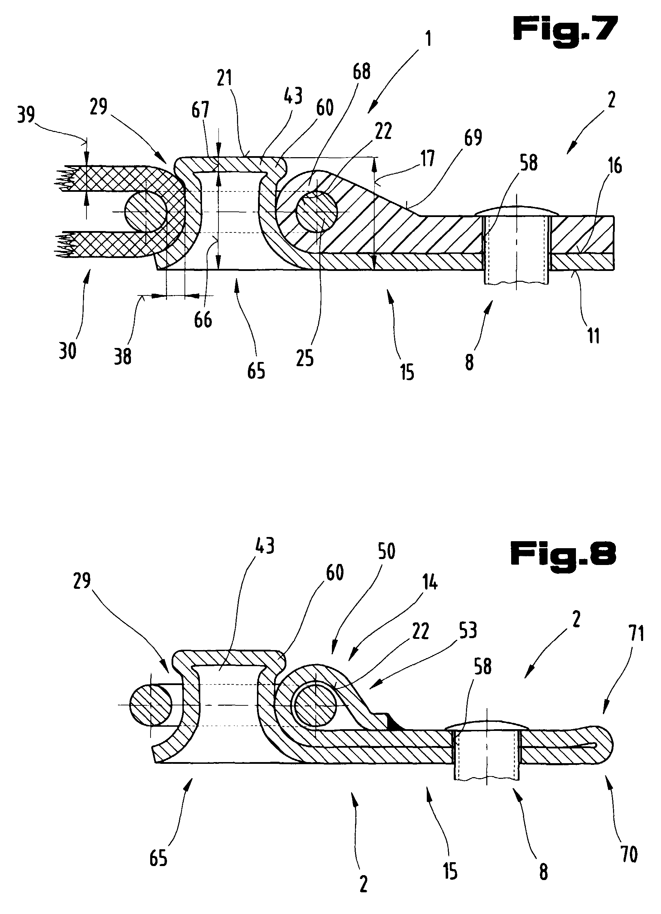

In der Fig. 7 ist eine andere Ausführungsvariante der Klemmvorrichtung 1 gezeigt. Diese besteht aus der Nietlasche 2 und dem mit der Befestigungslasche 15 einstückig verbundenen Klemmkörper 43, welcher als Spritz-, Preß- oder Gußteil aus Metall und/oder Kunststoff gebildet ist. Der Klemmkörper 43 hat, der Nietlasche 2 abgewandt, den Klemmbereich 29 für das Befestigungsmittel 30. Die Klemmung wird wiederum dadurch erreicht, daß die Distanz 38 geringer ist als die Dicke 39 des unverformten Befestigungsmittels 30. Der Klemmkörper 43 ist im Gegensatz zu den vorhergehenden Varianten kein Vollkörper, sondern weist beispielsweise einen Hohlraum 65 auf, dessen im rechten Winkel zur Auflagefläche 11 gemessene Tiefe 66 um eine Wandstärke 67 der Befestigungslasche 15 bzw. des Klemmkörpers 43 geringer ist als die durch die Auflagefläche 11 und der dieser abgewandten Oberseite 21 begrenzten Dicke 17. Der Klemmkörper 43 besitzt weiters den der Nietlasche 2 zugewandten Arretiervorsprung 60, welcher eine Relativbewegung der Nietlasche 2 in entgegengesetzter Richtung zur Auflagefläche 11 bzw. in Richtung des Klemmbereichs 29 verhindert. Die Nietlasche 2 ist als Kunststoffteil ausgebildet, welcher einen Verstärkungsbereich 68 besitzt, in dem die Lagerbohrung 22 der Schwenkachsen 25 angeordnet sind. Vom Verstärkungsbereich 68 verläuft eine Neigungsfläche 69 in Richtung der Öffnung 8 bzw. des mit dieser korrespondierenden Durchbruches 58 geneigt zur Oberfläche 16.

In der Fig. 8 ist eine Ausführungsvariante dargestellt, bei welcher die Nietlasche 2 einstückig als doppellagig ausgebildeter Biegeteil gestaltet ist. Der Klemmkörper 43 ist mit der Befestigungslasche 15 und der Nietlasche 2 einstückig verbunden und weist den Arretiervorsprung 60, den Klemmbereich 29 sowie den Hohlraum 65 auf. Die Nietlasche 2, welche den das Schwenklager 14 bzw. die Lagerbohrung 22 ausbildenden Biegebereich 50 sowie den Neigungsbereich 53 aufweist, ist in einem dem Klemmbereich 29 gegenüberliegenden Endbereich 70 mit der Befestigungslasche 15 einstückig in Form einer Biegung 71 verbunden. Diese ist dabei so ausgestaltet, daß der Durchbruch 58 mit der Öffnung 8 in konzentrischer Deckungslage ist.

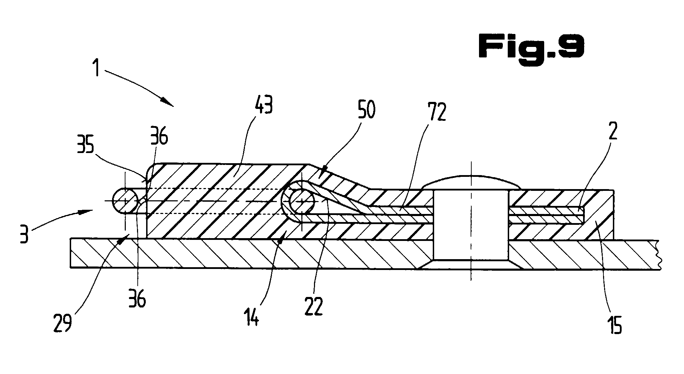

In der Fig. 9 ist schließlich eine Weiterbildung der Klemmvorrichtung 1 dargestellt. Diese besteht aus dem Klemmkörper 43 und der an diesen angeformten Befestigungslasche 15. Der Klemmkörper 43 wird, wie in den vorangegangenen Ausführungsbeispielen bereits beschrieben, von der Ringöse 3 umfaßt und bildet durch die einander gegenüberliegenden Klemmflächen 36 den Klemmbereich 29 aus. Die Stirnfläche 35 ist jedoch ebenflächig gestaltet (ohne nutförmige Vertiefung 37), wodurch eine ebenflächige Klemmfläche 36 geschaffen wird. In die Befestigungslasche 15 eingeformt befindet sich die Nietlasche 2, welche als Biegeteil ausgebildet ist, deren Biegebereich 50 dem Klemmkörper 43 benachbart angeordnet ist. Die Nietlasche 2 kann jedoch auch beispielsweise aus Keramik oder aus gitter- bzw. gewebeförmigen Kunststoffasern gebildet sein, welche mit Fasern, insbesondere Glas-, Kohle- oder Aramidfasern, verstärkt sind. Dadurch wird ein Verstärkungsteil 72 zur Aufnahme insbesondere des Schwenklagers 14 bzw. dessen Lagerbohrungen 22 ausgebildet.

Selbstverständlich ist es möglich, die verschiedenen Ausführungsdetails, welche eigenständige Erfindungen darstellen können, miteinander zu kombinieren. Zum Zwecke der besseren Sichtbarmachung der erfindungsgemäßen Details wurde die Klemmvorrichtung in den einzelnen Figuren unmaßstäblich dargestellt.

### Bezugszeichenaufstellung

- 1: Klemmvorrichtung
- 2: Nietlasche
- 3: Ringöse
- 4: Längsmittelachse
- 5: Länge

- 6: Breite
- 7: Teilbereich
- 8: Öffnung
- 9: Klemmkörper
- 10: Schwächungsbereich

- 11: Auflagefläche
- 12: Tiefe
- 13: Breite
- 14: Schwenklager
- 15: Befestigungslasche

- 16: Oberfläche
- 17: Dicke
- 18: Verbindungssteg
- 19: Abstand
- 20: Stärke

- 21: Oberseite
- 22: Lagerbohrung
- 23: Seitenfläche
- 24: Seitenfläche
- 25: Schwenkachse

- 26: Drehachse
- 27: Endbereich
- 28: Bügel
- 29: Klemmbereich
- 30: Befestigungsmittel

- 31: Schnürsenkel
- 32: Schwenkwinkel
- 33: Innenweite
- 34: innere Oberfläche
- 35: Stirnfläche

- 36: Klemmflächen
- 37: Vertiefung
- 38: Distanz
- 39: Dicke
- 40: Rippe

- 41: Abstand
- 42: Neigungswinkel
- 43: Klemmkörper
- 44: Umrißkante
- 45: Radius

- 46: Symmetrieachse
- 47: Teilschenkel
- 48: Schenkelwinkel
- 49: Neigung
- 50: Biegebereich

- 51: Biegeradius
- 52: Durchmesser
- 53: Neigungsbereich
- 54: Berührungspunkt
- 55: Teilschenkel

- 56: Teilschenkel
- 57: Tangentenpunkt
- 58: Durchbruch
- 59: Durchbruch
- 60: Arretiervorsprung

- 61: Einformung
- 62: Schwenkradius
- 63: Weite
- 64: Umrißkante
- 65: Hohlraum

- 66: Tiefe
- 67: Wandstärke
- 68: Verstärkungsbereich
- 69: Neigungsfläche
- 70: Endbereich

- 71: Biegung
- 72: Verstärkungsteil

## Patentansprüche

1. Klemmvorrichtung für ein schnur- oder bandförmiges Befestigungsmittel, wie z.B. Schnürsenkel, für Schuhe, Jacken, Hosen und andere Bekleidungsgegenstände, bestehend aus einer Ringöse zum Umlenken des Befestigungsmittels und einer ein Schwenklager für die Ringöse ausbildenden Nietlasche, welche mittels zumindest einem Befestigungselement, wie beispielsweise eine Niete, eine Naht oder eine Klebung, mit dem Bekleidungsgegenstand verbunden ist, dadurch gekennzeichnet, daß die Nietlasche (2) einen mit dieser verbundenen Klemmkörper (9; 43) aufweist, der mit einer Stirnfläche (35) versehen ist, die bei in etwa parallel zu einer Auflagefläche (11) befindlichen Lage der Ringöse (3) von dieser in einem Klemmbereich (29) umfaßt ist, welcher aus durch die Stirnfläche (35) und einer dieser zugewandten inneren Oberfläche (34) der Ringöse (3) gebildeten Klemmflächen (36) aufgebaut ist, und daß im Klemmbereich (29) die Klemmflächen (36) in einer Distanz (38) voneinander beabstandet sind, und daß die Distanz (38) zwischen der Stirnfläche (35) des Klemmkörpers (9; 43) und der inneren Oberfläche (34) der Ringöse (3) kleiner ist als eine Dicke (39) des Befestigungsmittels (30) in unverformtem Zustand. (Fig. 2, 9)

2. Klemmvorrichtung nach Patentanspruch 1, dadurch gekennzeichnet, daß die Distanz (38) über den Verlauf der Stirnfläche (35) des Klemmkörpers (9; 43) bzw. über den Verlauf der inneren Oberfläche (34) der Ringöse (3) in etwa konstant ist. (Fig. 1, 3)

3. Klemmvorrichtung nach einem oder mehreren der Patentansprüche 1 bis 2, dadurch gekennzeichnet, daß der Klemmkörper (9; 43) mit der Nietlasche (2) einstückig verbunden, insbesondere an diese angeformt, angeklebt oder angeschweißt ist. (Fig. 2, 4)

4. Klemmvorrichtung nach einem oder mehreren der Patentansprüche 1 bis 3, dadurch gekennzeichnet, daß der Klemmkörper (9; 43) eine Oberfläche (16) einer am Klemmkörper (9; 43) angeordneten, beispielsweise angeformten, angeklebten oder angeschweißten Befestigungslasche (15) um eine Höhe, die größer ist als ein Durchmesser (52) der Ringöse (3), überragt.
(Fig. 4)

5. Klemmvorrichtung nach einem oder mehreren der Patentansprüche 1 bis 4, dadurch gekennzeichnet, daß die Stirnfläche (35) des Klemmkörpers (9; 43) eine zu dieser in etwa konzentrisch verlaufende nutförmige Vertiefung (37) aufweist. (Fig. 1)

6. Klemmvorrichtung nach einem oder mehreren der Patentansprüche 1 bis 5, dadurch gekennzeichnet, daß eine Breite (6) des Klemmkörpers (9; 43) geringfügig kleiner ist als eine parallel zu einer Lagerbohrung (22) des Schwenklagers (14) verlaufende Innenweite (33) der Ringöse (3). (Fig. 1)

7. Klemmvorrichtung nach einem oder mehreren der Patentansprüche 1 bis 6, dadurch gekennzeichnet, daß der die Lagerbohrung (22) aufnehmende Bereich des Schwenklagers (14) in Richtung der Oberfläche (16) der Befestigungslasche (15) konisch verjüngt ausgebildet ist.

8. Klemmvorrichtung nach einem oder mehreren der Patentansprüche 1 bis 7, dadurch gekennzeichnet, daß die parallel zur Oberfläche (16) verlaufende Distanz (38) durch die innere Oberfläche (34) der Ringöse (3) und einer dieser zugewandten Oberfläche der nutförmigen Vertiefung (37) begrenzt ist und kleiner ist als eine Dicke (39) des Befestigungsmittels (30) in unverformtem Zustand. (Fig. 2)

9. Klemmvorrichtung nach einem oder mehreren der Patentansprüche 1 bis 8, dadurch gekennzeichnet, daß der Klemmkörper (9; 43) aus Kunststoff gebildet ist und/oder der die Lagerbohrung (22) aufnehmende Bereich durch symmetrisch und parallel zu einer Längsmittelachse (4) der Nietlasche (2) verlaufende, die Oberfläche (16) der Befestigungslasche (15) überragende Rippen (40) ausgebildet ist. (Fig. 3)

10. Klemmvorrichtung nach einem oder mehreren der Patentansprüche 1 bis 9, dadurch gekennzeichnet, daß die Ringöse (3) in etwa C-förmig ausgebildet ist und in einander zugewandten, in die Lagerbohrung (22) ragenden, geradlinig verlaufenden Endbereichen (27) Schwenkachsen (25) bildet. (Fig. 1)

11. Klemmvorrichtung nach einem oder mehreren der Patentansprüche 1 bis 10, dadurch gekennzeichnet, daß die Nietlasche (2) vom Klemmkörper (9; 43) getrennt ist und als eigener Teil auf der Oberfläche (16) der am Klemmkörper (9; 43) angeordneten Befestigungslasche (15) mittels Befestigungselemente angeordnet ist. (Fig. 6)

12. Klemmvorrichtung nach einem oder mehreren der Patentansprüche 1 bis 11, dadurch gekennzeichnet, daß die Nietlasche (2) zumindest einen mit einer entsprechenden Öffnung (8) der Befestigungslasche (15) koaxial verlaufenden Durchbruch (58; 59) für das Befestigungselement aufweist.
(Fig. 6)

13. Klemmvorrichtung nach einem oder mehreren der Patentansprüche 1 bis 12, dadurch gekennzeichnet, daß der Klemmkörper (9; 43) gemeinsam mit der Befestigungslasche (15) durch einen einstückigen Spritz-, Preß- oder Gußteil aus Metall und/oder Kunststoff gebildet ist. (Fig. 2, 7)

14. Klemmvorrichtung nach einem oder mehreren der Patentansprüche 1 bis 13, dadurch gekennzeichnet, daß der Klemmkörper (9; 43) aus einem doppellagig ausgebildeten Biegeteil gebildet ist, der einer Biegung (71) zugewandt einander überdeckende Durchbrüche (58; 59) für das Befestigungselement aufweist und ein Endbereich eines Schenkels eine Lagerbohrung (22) für die Schwenkachsen (25) der Ringöse (3) ausbildet. (Fig. 8)

15. Klemmvorrichtung nach einem oder mehreren der Patentansprüche 1 bis 14, dadurch gekennzeichnet, daß der Klemmkörper (9; 43) dem Biegebereich (50) zugewandt in einer Distanz von der Oberfläche (16) einen Arretiervorsprung (6()) für die Nietlasche (2) aufweist und die vom Biegebereich (50) abgewandte Stirnfläche (35) des Klemmkörpers (9; 43) den Klemmbereich (29) für das die Ringöse (3) durchlaufende Befestigungsmittel (30) ausbildet.
(Fig. 8)

16. Klemmvorrichtung nach einem oder mehreren der Patentansprüche 1 bis 15, dadurch gekennzeichnet, daß das Schwenklager (14), insbesondere die Lagerbohrung (22), durch den Arretiervorsprung (60) einen Teilbereich des Klemmkörpers (9; 43), der Oberfläche (16) und einer die Schwenkachsen (25 ) vom Arretiervorsprung (60) bis zur Oberfläche (16) in etwa viertelkreisförmig umfassenden Lagerkröpfung der Nietlasche (2) gebildet ist.

17. Klemmvorrichtung nach einem oder mehreren der Patentansprüche 1 bis 16, dadurch gekennzeichnet, daß ein von der Drehachse (26) gemessener, durch die innere Oberfläche (34) begrenzter Schwenkradius (62) der Ringöse (3) kleiner ist als eine Weite (63), welche durch die Drehachse (26) und einer durch die Stirnfläche (35) und der Auflagefläche (11) bzw. der Oberseite (21) gebildeten Umrißkante (64) begrenzt wird. (Fig. 6)

18. Klemmvorrichtung nach einem oder mehreren der Patentansprüche 1 bis 17, dadurch gekennzeichnet, daß der Schwenkbereich der Ringöse (3) durch elastische Verformung derselben aus einer parallel zur Oberfläche (16) verlaufenden Sperrstellung für das Befestigungsmittel (30) in eine dieses freigebende, von der Oberfläche (16) entfernten Stellung einen Schwenkwinkel (32) aufweist, welcher kleiner als 180° ist.

19. Klemmvorrichtung nach einem oder mehreren der Patentansprüche 1 bis 18, dadurch gekennzeichnet, daß die Nietlasche (2) als Verstärkungsteil (72) in den Klemmkörper (9; 43) und/oder in die Befestigungslasche (15) eingespritzt ist und der Verstärkungsteil (72) aus Blech, Keramik oder als Gitter bzw. Gewebe aus Kunststoff mit Faserverstärkung, insbesondere Glas-, Kohle- oder Aramidfaser, gebildet ist. (Fig. 9)

## Claims

1. Clip device for a cord- or tape -shaped fastening element such as tying laces, for shoes, jackets, trousers and other articles of clothing, comprising a ring lug for looping the fastening element and a rivet strap which forms a hinge bearing for the ring lug and which is joined to the article of clothing by means of at least one fixing element, such as for example a rivet, stitching or gluing, characterized in that the rivet strap (2) has a jamming cleat (9; 43) joined to the rivet strap and provided with an end face (35) which is surrounded by the ring lug (3) when the latter is in a position more or less parallel with a contact surface (11), in a jamming zone (29) which is made up of jamming surfaces (36) formed by the end face (35) and an inner surface (34) of the ring lug (3) facing the end face (35), and in that the jamming surfaces (36) are separated from each other by a gap (38) in the jamming zone (29) and in that the gap (38) between the end face (35) of the jamming cleat (9; 43) and the inner surface (34) of the ring lug (3) is smaller than a thickness (39) of the fastening element (30) in the undeformed condition. (Figs. 2, 9)

2. Clip device according to claim 1, characterized in that the gap (38) is approximately constant over the extent of the end face (35) of the jamming cleat (9; 43), or over the extend of the inner surface (34) of the ring lug (3). (Figs. 1, 3)

3. Clip device according to one or more of claims 1 to 2, characterized in that the jamming cleat (9; 43) is joined to the rivet strap (2) as one piece, and in particular is moulded, glued or welded to it. (Figs. 2, 4)

4. Clip device according to one or more of claims 1 to 3, characterized in that the jamming cleat (9; 43) rises above an upper surface (16) of a fixing tab (15) arranged on, and for example moulded, glued or welded on, the jamming cleat (9; 43) by a height which is greater than a diameter (52) of the ring lug (3). (Fig. 4)

5. Clip device according to one or more of claims 1 to 4, characterized in that the end face (35) of the jamming cleat (9; 43) has a groove-like indentation (37) extending more or less concentrically with the said end face. (Fig. 1)

6. Clip device according to one or more of claims 1 to 5, characterized in that a width (6) of the jamming cleat (9; 43) is slightly smaller than an inner width (33) of the ring lug (3) extending parallel with a bearing hole (22) of the hinge bearing (14). (Fig. 1)

7. Clip device according to one or more of claims 1 to 6, characterized in that the region of the hinge bearing (14) accommodating the bearing hole (22) tapers towards the upper surface (16) of the fixing tab (15).

8. Clip device according to one or more of claims 1 to 7, characterized in that the gap (38) extending parallel with the upper surface (16) is bounded by the inner surface (34) of the ring lug (3) and a facing surface of the groove-like indentation (37) and is smaller than a thickness (39) of the fastening element (30) in the undeformed condition. (Fig. 2)

9. Clip device according to one or more of claims 1 to 8, characterized in that the jamming cleat (9; 43) is formed of plastic material and/or the region accommodating the bearing hole (22) is formed by ribs (40) extending symmetrically about and parallel with a longitudinal centre line (4) of the rivet strap (2) and rising above the upper surface (16) of the fixing tab (15). (Fig. 3)

10. Clip device according to one or more of claims 1 to 9, characterized in that the ring lug (3) is formed approximately in the shape of a C and forms hinge arms (25) in straight end regions (27) which point towards each other and protect into the bearing hole (22). (Fig. 1)

11. Clip device according to one or more of claims 1 to 10, characterized in that the rivet strap (2) is separate from the jamming cleat (9; 43) and is arranged as an independent part, by means of fixing elements, on the upper surface (16) of the fixing tab (15) arranged on the jamming cleat (9; 43). (Fig. 6)

12. Clip device according to one or more of claims 1 to 11, characterized in that the rivet strap (2) has at least one through hole (58; 59) for the fixing element, extending coaxially with a corresponding hole (8) in the fixing tab (15). (Fig. 6)

13. Clip device according to one or more of claims 1 to 12, characterized in that the jamming cleat (9; 43) together with the fixing tab (15) is formed by a one-piece injection or press moulded or cast part of metal and/or plastic material. (Figs. 2, 7)

14. Clip device according to one or more of claims 1 to 13, characterized in that the jamming cleat (9; 43) is formed from a two-ply bent component which has through holes (58; 59) for the fixing element in register with one another adjacent to a bend (71), with an end region of one leg forming a bearing hole (22) for the hinge arms (25) of the ring lug (3). (Fig. 8)

15. Clip device according to one or more of claims 1 to 14, characterized in that the jamming cleat (9; 43) carries on the side facing the bend zone (50) and at a distance from the upper surface (16) a latching projection (60) for the rivet strap (2), and the end face (35) of the jamming cleat (9; 43) facing away from the bend zone (50) forms the jamming zone (29) for the fastening element (30) threaded through the ring lug (3). (Fig. 8)

16. Clip device according to one or more of claims 1 to 15, characterized in that the hinge bearing (14), and in particular the bearing hole (22), is formed by the latching projection (60), regions of the jamming cleat (9; 43), the upper surface (16) and a crimped bearing on the rivet strap (2) clasping the hinge arms (25) between latching projection (60) and upper surface (16) in an approximately quadrantal [recess].

17. Clip device according to one or more of claims 1 to 16, characterized in that a pivot radius (62) of the ring lug (3) measured from the pivot axis (26) and bounded by the inner surface (34) is smaller than a span (63) which is bounded by the pivot axis (26) and a rim (64) formed by the end face (35) and the contact surface (11) or the upper side (21). (Fig. 6)

18. Clip device according to one or more of claims I to 17, characterized in that the ring lug (3) pivots through an angle (32) of less than 180° through elastic deformation of the ring lug, from a position extending parallel with the upper surface (16) in which the fastening element (30) is locked, to a position further away from the upper surface (16) in which the said fastening element is released.

19. Clip device according to one or more of claims 1 to 18, characterized in that the rivet strap (2) is embedded in the injection moulding process, as a reinforcing part (72), in the jamming cleat (9; 43) and/or in the fixing tab (15) and the reinforcing part (72) is formed from sheet metal, ceramics or as a lattice or web of plastic with fibre reinforcement, in particular of glass, carbon or aramide fibre. (Fig. 9)

## Revendications

1. Dispositif de serrage pour un moyen de fixation en forme de ficelle ou de ruban, comme par exemple des lacets, pour des chaussures, vestes, pantalons et autres vêtements, constitué d'un oeillet annulaire pour dévier le moyen de fixation et d'une languette rivée constituant un palier de pivotement pour l'oeillet annulaire, qui est reliée par au moins un élément de fixation, comme par exemple un rivet, une couture ou un collage, aux vêtements, caractérisé en ce que la languette rivée (2) présente un corps de serrage (9 ; 43) relié à celle-ci qui présente une face frontale (35) qui, lorsque l'oeillet annulaire (3) se trouve dans une position à peu près parallèle à une face d'application (11), est entourée par celui-ci dans une zone de serrage (29) qui est constituée de faces de serrage (36) formées par la face frontale (35) et d'une surface interne (34) de l'oeillet annulaire (3) orientée vers celle-ci, et en ce que dans la zone de serrage (29), les faces de serrage (36) sont espacées selon une distance (38) l'une de l'autre, et que la distance (38) entre la face frontale (35) du corps de serrage (9 ; 43) et la surface interne (34) de l'oeillet annulaire (3) est plus petite qu'une épaisseur (39) du moyen de fixation (30) à l'état non déformé. (Figures 2, 9).

2. Dispositif de serrage selon la revendication 1, caractérisé en ce que la distance (38) est à peu près constante sur l'étendue de la face frontale (35) du corps de serrage (9 ; 43) respectivement sur l'étendue de la surface interne (34) de l'oeillet annulaire (3). (Figures 1, 3).

3. Dispositif de serrage selon l'une des revendications 1 ou 2, caractérisé en ce que le corps de serrage (9 ; 43) est relié unitairement à la languette rivée (2), et qu'il est notamment rapporté par formage, collé ou soudé à celle-ci. (Figures 2, 4).

4. Dispositif de serrage selon l'une ou plusieurs des revendications 1 à 3, caractérisé en ce que le corps de serrage (9 ; 43) dépasse une surface (16) d'une languette de fixation (15) disposée au corps de serrage (9 ; 43), par exemple rapportée par formage, collée ou soudée à celui-ci d'une hauteur qui est plus grande qu'un diamètre (52) de l'oeillet annulaire (3). (Figure 4)

5. Dispositif de serrage selon l'une ou plusieurs des revendications 1 à 4, caractérisé en ce que la face frontale (35) du corps de serrage (9 ; 43) présente un creux en forme de rainure (37) s'étendant relativement à celle-ci à peu près d'une manière concentrique. (Figure 1)

6. Dispositif de serrage selon l'une ou plusieurs des revendications 1 à 5, caractérisé en ce qu'une largeur (6) du corps de serrage (9 ; 43) est légèrement plus petite qu'une largeur interne (33) de l'oeillet annulaire (3) s'étendant parallèlement à un perçage de palier (22) du palier pivotant (14). (Figure 1).

7. Dispositif de serrage selon l'une ou plusieurs des revendications 1 à 6, caractérisé en ce que la zone du palier pivotant (14) reçevant le perçage de palier (22) est réalisée avec un rétrécissement conique dans la direction de la surface (16) de la languette de fixation (15).

8. Dispositif de serrage selon l'une ou plusieurs des revendications 1 à 7, caractérisé en ce que la distance (38) s'étendant parallèlement à la surface (16) est délimitée par la surface interne (34) de l'oeillet annulaire (3) et une surface orientée vers celui-ci du creux en forme de rainure (37) et qu'elle est plus petite qu'une épaisseur (39) du moyen de fixation (30) à l'état non déformé. (Figure 2).

9. Dispositif de serrage selon l'une ou plusieurs des revendications 1 à 8, caractérisé en ce que le corps de serrage (9 ; 43) est réalisé en matière synthétique et/ou la zone reçevant le perçage de palier (22) est constituée par des nervures (40) s'étendant symétriquement et parallèlement à un axe médian longitudinal (4) de la languette rivée (2), faisant saillie sur la surface (16) de la languette de fixation (15). (Figure 3).

10. Dispositif de serrage selon l'une ou plusieurs des revendications 1 à 9, caractérisé en ce que l'oeillet annulaire (3) est réalisé à peu près en forme de C et constitue des axes de pivotement (25) dans des zones d'extrémité (27) orientées l'une vers l'autre, faisant saillie dans le perçage de palier (22) et s'étendant d'une manière rectiligne. (Figure 1).

11. Dispositif de serrage selon l'une ou plusieurs des revendications 1 à 10, caractérisé en ce que la languette rivée (22) est séparée du corps de serrage (9 ; 43) et est disposée comme pièce individuelle sur la surface (16) de la languette de fixation (15) disposée au corps de serrage (9 ; 43), par des éléments de fixation. (Figure 6).

12. Dispositif de serrage selon l'une ou plusieurs des revendications 1 à 11, caractérisé en ce que la languette rivée (2) présente au moins un perçage (58 ; 59) s'étendant coaxialement à une ouverture correspondante (8) de la languette de fixation (15), pour l'élément de fixation. (Figure 6).

13. Dispositif de serrage selon l'une ou plusieurs des revendications 1 à 12, caractérisé en ce que le corps de serrage (9 ; 43), conjointement avec la languette de fixation (15), est formé par une pièce unitaire réalisée par injection, pressage ou coulée en métal et/ou matière synthétique. (Figures 2, 7).

14. Dispositif de serrage selon l'une ou plusieurs des revendications 1 à 13, caractérisé en ce que le corps de serrage (9 ; 43) est constitué par une pièce pliée en couche double, qui présente des perçages (58, 59) orientés vers un pliage (71), recouvrant l'un l'autre, pour l'élément de fixation, et une zone d'extrémité d'une branche constitue un perçage de palier (22) pour les axes de pivotement (25) de l'oeillet annulaire (3). (Figure 8).

15. Dispositif de serrage selon l'une ou plusieurs des revendications 1 à 14, caractérisé en ce que le corps de serrage (9 ; 43), présente, orientée vers la zone de pliage (50), à une distance de la surface (16) une saillie d'arrêt (60) pour la languette rivée (2) et que la face frontale (35) du corps de serrage (9 ; 43) éloignée de la zone de pliage (50) constitue la zone de serrage (29) du moyen de fixation (30) traversant l'oeillet annulaire (3). (Figure 8).

16. Dispositif de serrage selon l'une ou plusieurs des revendications 1 à 15, caractérisé en ce que le palier pivotant (14), notamment le perçage de palier (22), est formé par la saillie d'arrêt (60), une zone partielle du corps de serrage (9 ; 43), la surface (16) et un coude de palier'de la languette rivée (2) entourant à peu près en une forme de quart de cercle les axes de pivotement (25) depuis la saillie d'arrêt (60) jusqu'à la surface (16).

17. Dispositif de serrage selon l'une ou plusieurs des revendications 1 à 16, caractérisé en ce qu'un rayon de pivotement (62) de l'oeillet annulaire (3), mesuré depuis l'axe de rotation (26), limité par la surface interne (34), est plus petit qu'une largeur (63) qui est limitée par l'axe de rotation (26) et une arête de contour (64) formée par la face frontale (35) et la face d'application (11) respectivement le côté supérieur (21). (Figure 6).

18. Dispositif de serrage selon l'une ou plusieurs des revendications 1 à 17, caractérisé en ce que la zone de pivotement de l'oeillet annulaire (3), par une déformation élastique de celui-ci, depuis une position de blocage du moyen de fixation (30) s'étendant parallèlement à la surface (16) en une position libérant celui-ci, éloignée de la surface (16), présente un angle de pivotement (32) qui est plus petit que 180°.

19. Dispositif de serrage selon l'une ou plusieurs des revendications 1 à 18, caractérisé en ce que la languette rivée (2) est injectée comme partie de renforcement (72) dans le corps de serrage (9 ; 43) et/ou dans la languette de fixation (15) et que la partie de renforcement (72) est réalisée en tôle, céramique ou comme treillis respectivement tissu en matière synthétique avec un renforcement par des fibres, notamment des fibres de verre, de carbone ou d'aramide. (figure 9).
